# EUROPEAN PATENT APPLICATION

(11) **EP 1 605 186 A1**
(43) Date of publication of application: **14.12.2005**
(21) Application number: 04013729.1
(22) Date of filing: 11.06.2004
(51) Int. Cl.: F16H 9/10, F16H 55/54

(54) **Automatic stepless speed changing mechanism**

(71) Applicant: Jeng, Fu-shen, Yunghe City, Taipei Hsien (TW)
(72) Inventor: Jeng, Fu-shen, Yunghe City, Taipei Hsien (TW)
(74) Representative: Sandmann, Wolfgang

(57) **Abstract**

An automatic non-step speed changing mechanism mainly includes a pivot shaft (11), a first and a second set of joint disks (21,22) rotatably mounted on the pivot shaft (11), driving elements (31), and a transmission element (41) wound around the driving elements (31). The first and the second set of joint disks are provided with guide rails (211b,212b) and passages (221b,222b), respectively, for the driving elements (31) to slidably and rotatably locate therein. A guiding section (221c,222c) is provided in each of the passages (221b,222b) on the second set of joint disks for one driving element to mesh therewith while moving in and relative to the passage. When the driving elements (31) mesh with the guiding sections and slide in the guide rails and the passages respectively provided on the first and the second set of joint disks, a winding radius of the transmission element (41) wound around the driving elements is automatically changed.

## Description

### FIELD OF THE INVENTION

The present invention relates to an automatic non-step speed changing mechanism, which mainly involves in a variable speed mechanism, and more particularly to a mechanism capable of automatically changing the winding radius of a transmission element wound around driving elements, and accordingly, automatically changing the ratio of gear.

### BACKGROUND OF THE INVENTION

All the currently available vehicles, such as rickshas, electric motorcycles and automobiles, etc., have the following disadvantages: (1) failing to be energy efficient; (2) having a speed changing mechanism tending to produce high amount of heat due to internal friction; and (3) having a speed changing mechanism that is excessively heavy. Although experts who are familiar with this technical field have put tremendous efforts in an attempt to eliminate the above shortcomings, no ultimate improvement is realized due to lack of technological breakthrough. Only enhancing measures and improving methods have been taken to reduce the impact of the aforementioned defects on the vehicles, resulting in stagnation in this particular technical field and user complaints.

Taiwanese patent application serial No. 091118111 entitled Automatic non-step speed changing mechanism was filed by the same applicant of the present invention on August 12, 2002 , which was published on August 1, 2003 under publication No. 544498. Corresponding applications for the same invention include US patent application serial No. 10/234,518 filed on Sept. 5, 2002; Japanese patent application serial No. 2002-278001 filed on Sept. 24, 2002; European Community patent application serial No. 03009736.4 filed on May 2, 2003; and Chinese patent application serial No. 02129220.5 filed on Aug. 28, 2002 with a division number of 200410004738.1. The above-mentioned invention is characterized in having multiple joint disks mounted on a pivot shaft. The joint disks are provided with guide rails for axial rods to slide and rotate therein. The axial rods are provided with connecting mechanisms, restoring mechanisms, and driving elements. A transmission element is wound around the driving elements. Wherein, the driving elements are preferably gears, and the transmission element is preferably a chain. When the transmission element brings the driving elements to rotate, the connecting mechanisms and the restoring mechanisms cause the axial rods to slide and rotate in the guide rails, in order to change the winding radius of the transmission element wound around the driving elements and thereby achieve the function of automatically and steplessly changing the speed.

Therefore, when the automatic non-step speed changing mechanism of the above invention is employed on a driving mechanism and a driven mechanism, and when a force required by the driving elements on the pivot shaft to rotate the joint disks is smaller than a force needed by the transmission element to drive the driven mechanism, the driving elements on the driving mechanism would rotate counterclockwise. Meanwhile, the axial rods, on which the driving elements are fixed, slide inwards to reduce the winding radius of the transmission element wound around the driving elements on the driving mechanism when the driving elements on the driving mechanism are wound by the connecting mechanisms. Reversely, the winding radius of the transmission element wound around the driving elements on the driving mechanism will be increased. The restoring mechanism allows the above-mentioned mechanisms to return to their original state.

In summary, the automatic non-step speed changing mechanism disclosed in the above invention can not only automatically adjust the rotating radius in response to the changes in the applied force to achieve the effect of automatic non-step change of speed ratio, but also automatically adjust the rotating radius in response to the changes in the resisting force to achieve the effect of automatic non-step change of speed ratio. In addition, the use of gears and a chain as the driving elements and the transmission element, respectively, has the benefits of having a friction coefficient smaller than other types of transmission systems during the driving process and not producing high amount of heat to enable omission of cooling oil. Furthermore, the automatic non-step speed changing mechanism disclosed in the above invention is much lighter than general gearboxes.

While the above-described automatic non-step speed changing mechanism has many advantages superior to the prior art, it is still tried by the inventor to develop a further improved automatic non-step speed changing mechanism.

### SUMMARY OF THE INVENTION

A primary object of the present invention is to provide a mechanism that is able to automatically steplessly change the speed ratio thereof.

Another object of the present invention is to provide a relatively light-weighted speed changing mechanism.

A further object of the present invention is to provide a speed changing mechanism that does not require cooling oil.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is an exploded perspective view of the present invention being employed on a driving mechanism;
Fig. 2 is a partially assembled perspective view of Fig. 1;
Fig. 3 is an assembled perspective view of Fig. 1;
Fig. 4 is a side view of the present invention employed on a driving mechanism with driving elements thereof located close to the center of a joint disk;
Fig. 5 is side view of the present invention employed on a driving mechanism with the driving elements located close to the outer periphery of the joint disk;
Fig. 6 is an exploded perspective view of the present invention being employed on a driven mechanism;
Fig. 7 is a partially assembled perspective view of Fig. 6;
Fig. 8 is an assembled perspective view of Fig. 6;
Fig. 9 is a side view of the present invention employed on a driven mechanism with driving elements thereof located close to the center of a joint disk;
Fig. 10 is a side view of the present invention employed on a driven mechanism with the driving elements located close to the outer periphery of the joint disk;
Fig. 11 is an assembled perspective view showing a transmission element of the present invention is wound around the driving mechanism and the driven mechanism;
Fig. 12 is a side view of Fig. 11;
Fig. 13 is another assembled perspective view showing the transmission element of the present invention is wound around the driving mechanism and the driven mechanism;
Fig. 14 is a side view of Fig. 13;
Fig. 15 is an exploded perspective view of the present invention employed on a driving mechanism, wherein guide rails in the form of straight through openings and passages in the form of straight slots are provided;
Fig. 16 is an exploded perspective view of the present invention employed on a driven mechanism, wherein guide rails in the form of straight through openings and passages in the form of straight slots are provided;
Fig. 17 is an exploded perspective view of the present invention employed on a driving mechanism, wherein the transmission element is a chain;
Fig. 18 is an exploded perspective view of the present invention employed on a driven mechanism, wherein the transmission element is a chain;
Fig. 19 is an exploded perspective view of the present invention employed on a driving mechanism, wherein guide rails in the form of straight through openings and passages in the form of curved slots are provided;
Fig. 20 is an exploded perspective view of the present invention employed on a driven mechanism, wherein guide rails in the form of straight through openings and passages in the form of curved slots are provided;
Fig. 21 is an exploded perspective view of the present invention employed on a driving mechanism, wherein guide rails in the form of curved through openings and passages in the form of curved slots are provided; and
Fig. 22 is an exploded perspective view of the present invention employed on a driven mechanism, wherein guide rails in the form of curved through openings and passages in the form of curved slots are provided.

### DETAILED DESCRIPTION OF THE PREFERRED EMBODIMENTS

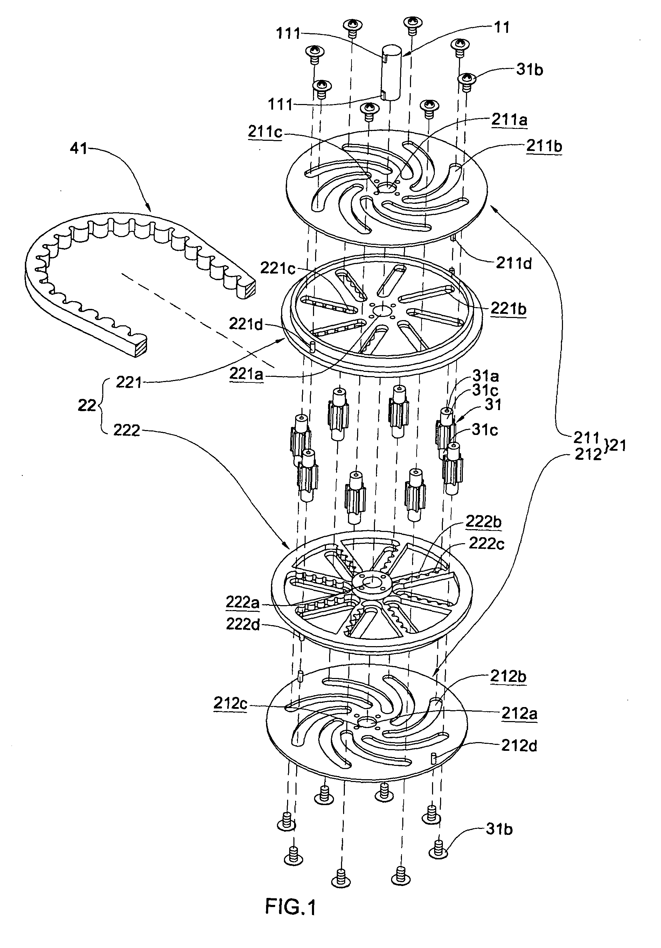

The present invention relates to an automatic non-step speed changing mechanism. Figs. 1, 2, and 3 demonstrates a preferred embodiment of the present invention being employed on a driving mechanism. As shown, the automatic non-step speed changing mechanism mainly includes a pivot shaft 11, a first set of joint disks 21, a second set of joint disks 22, a plurality of driving elements 31, and a transmission element 41. The first set of joint disks 21 consists of an upper joint disk 211 and a lower joint disk 212, which can either be manufactured as a single unit or, as illustrated in Fig. 1, two members assembled to form the first set of joint disks 21. The second set of joint disks 22 consists of an upper joint disk 221 and a lower joint disk 222, which can either be manufactured as a single unit or, as illustrated in Fig. 1, two members assembled to form the second set of joint disks 22.

As can be seen from Fig. 1, the pivot shaft 11 is provided with protrusions 111, and the upper and the lower joint disk 211, 212 are respectively provided with through holes 211a, 212a for the pivot shaft 11 to extend therethrough. The through holes 211 a, 212a are provided at predetermined positions with recesses 211c, 212c, respectively, for the protrusions 111 to engage therewith. The upper and the lower joint disks 221, 222 are also provided with a through hole 221 a and 222a, respectively, for the pivot shaft 11 to extend therethrough. To assemble the mechanism of the present invention, first sequentially extend the pivot shaft 11 through the through holes 211a, 221a, 222a, and 212a on the upper joint disk 211, the upper joint disk 221, the lower joint disk 222, and the lower joint disk 212 with the protrusions 111 on the pivot shaft 11 separately engaged with the recesses 211c and 212c on the upper and the lower joint disk 211, 212, respectively. The pivot shaft 11, after being extended through the through holes 211 a, 22 1 a, 222a, and 212a, may still be connected at two ends with at least one upper joint disk 211 or at least one lower joint disk 212, so that one or more sets of first joint disks 21 can be brought to rotate along with the pivot shaft 11.

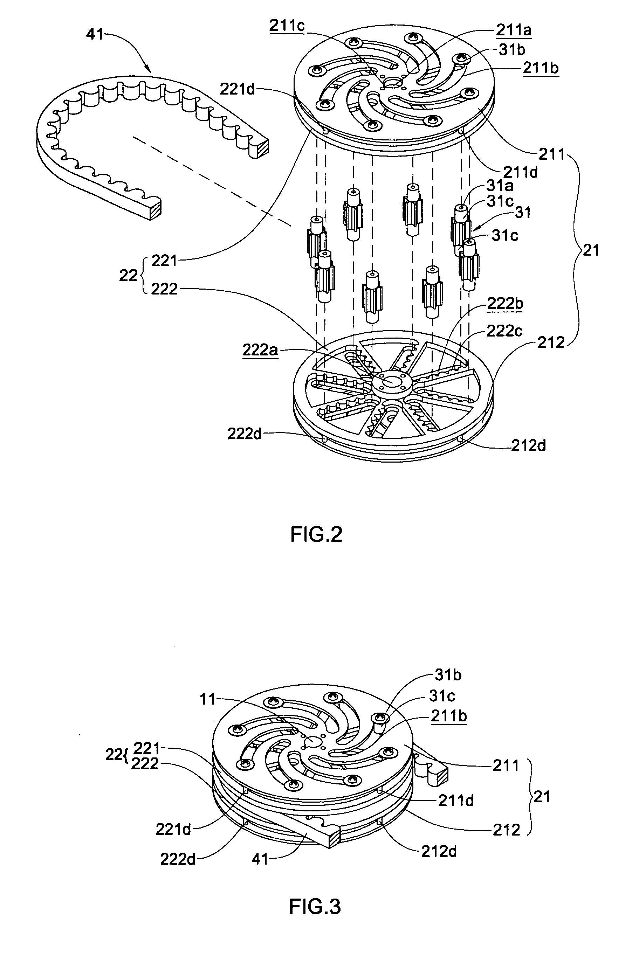

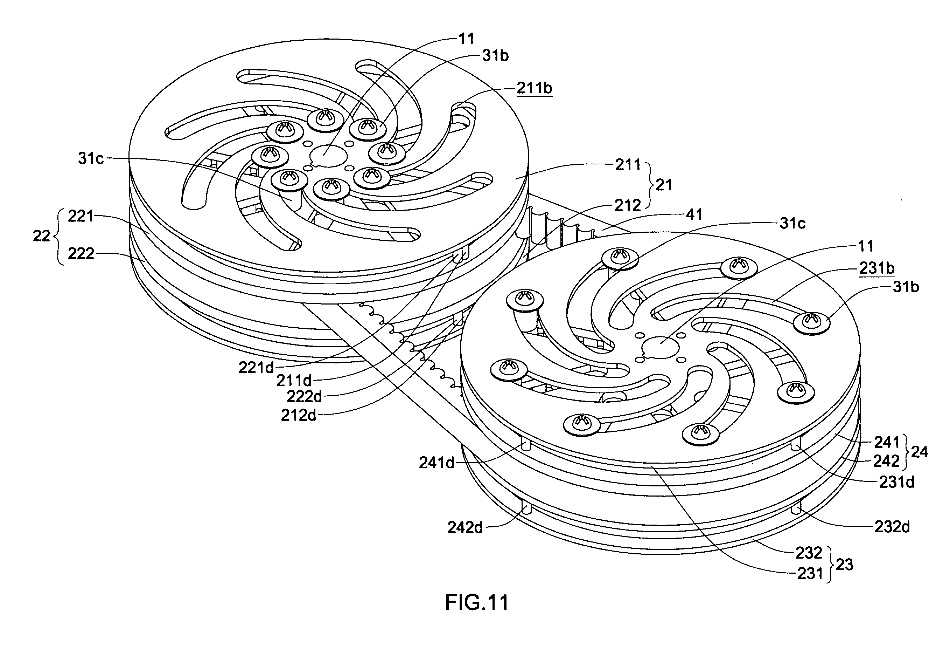

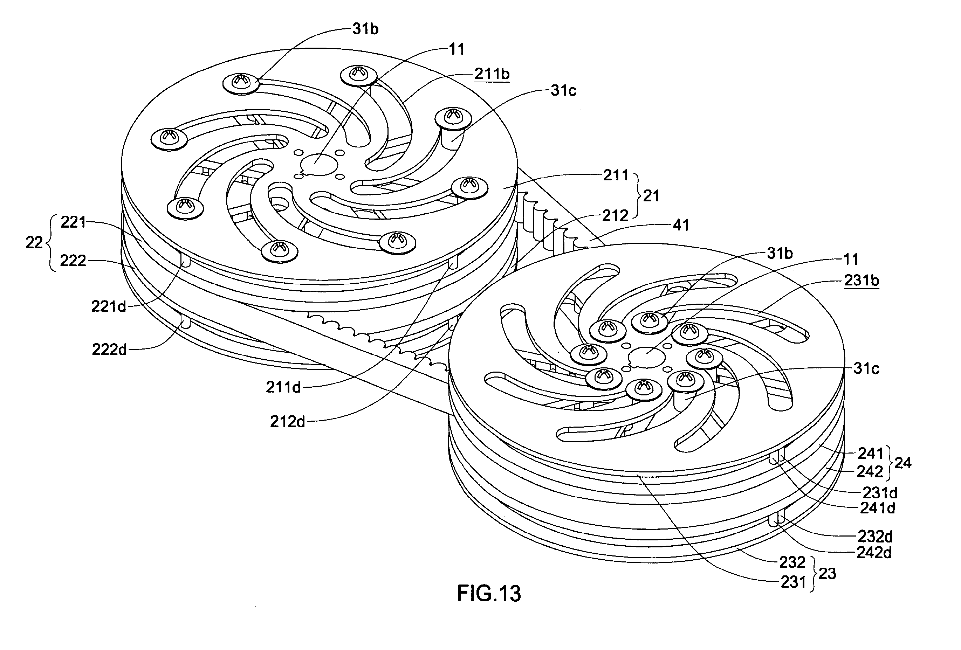

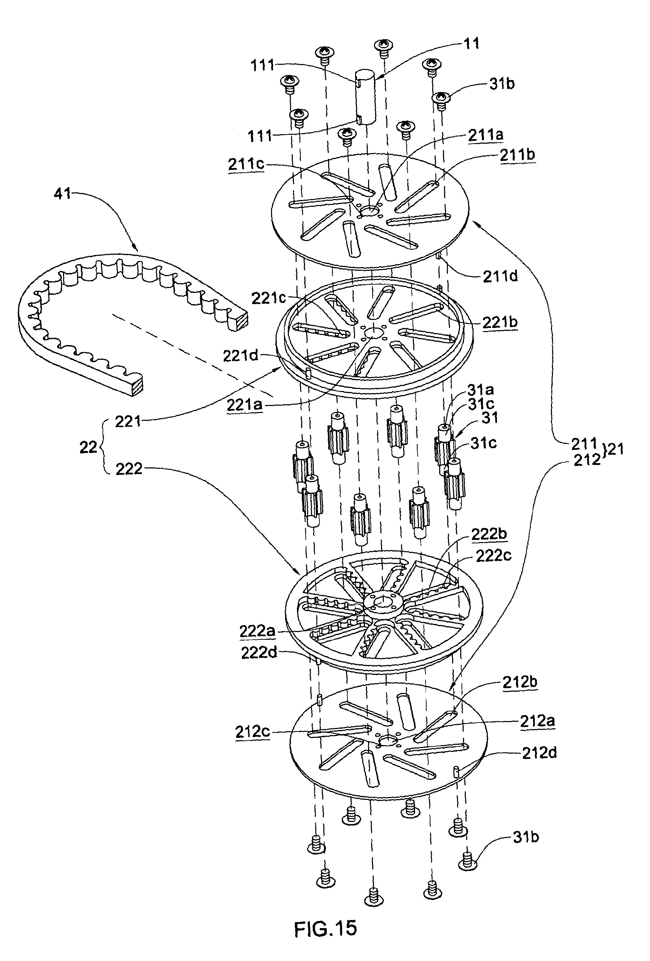

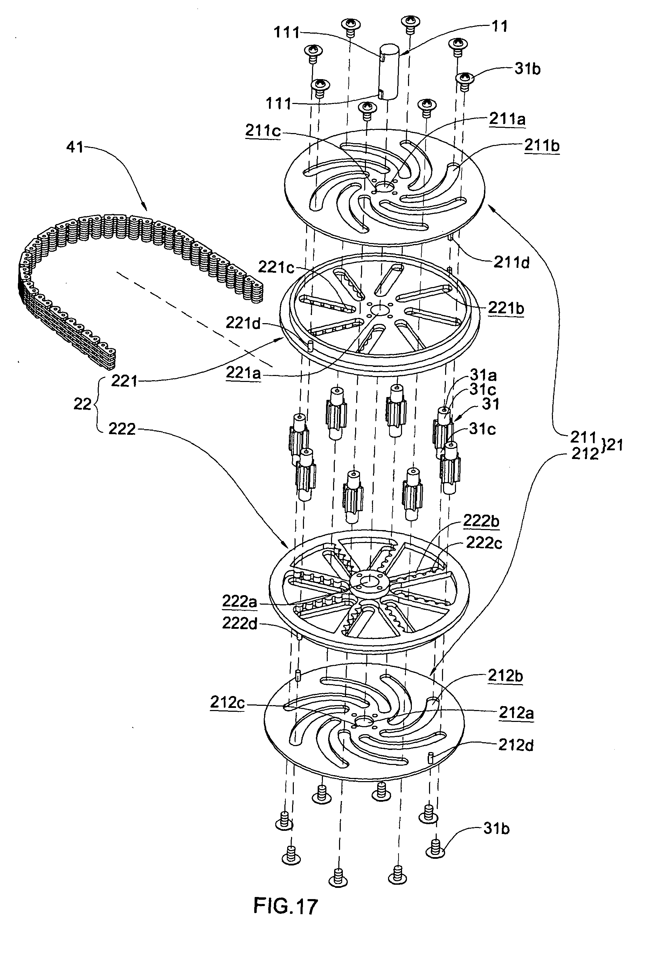

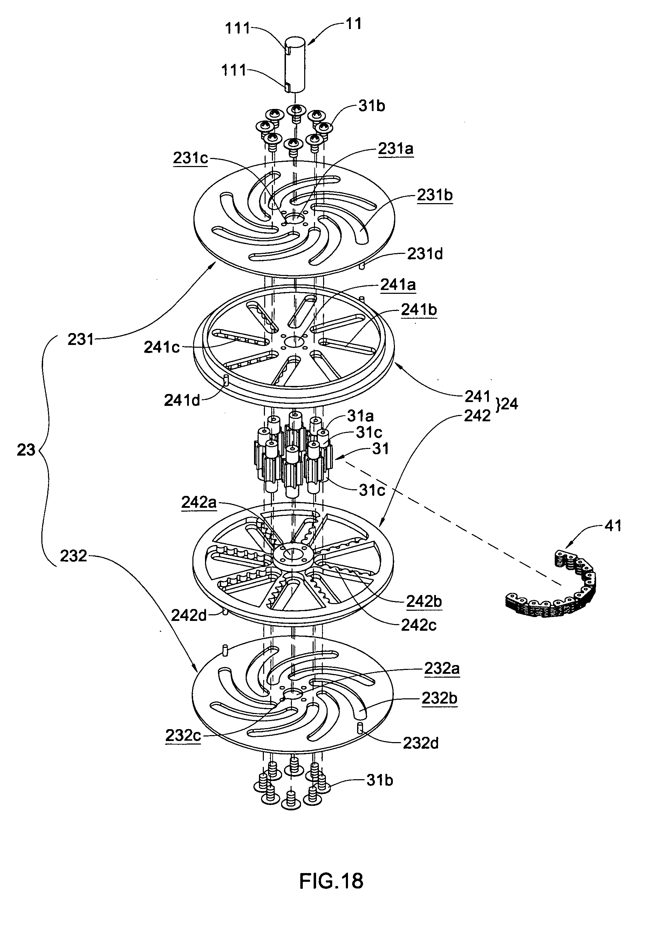

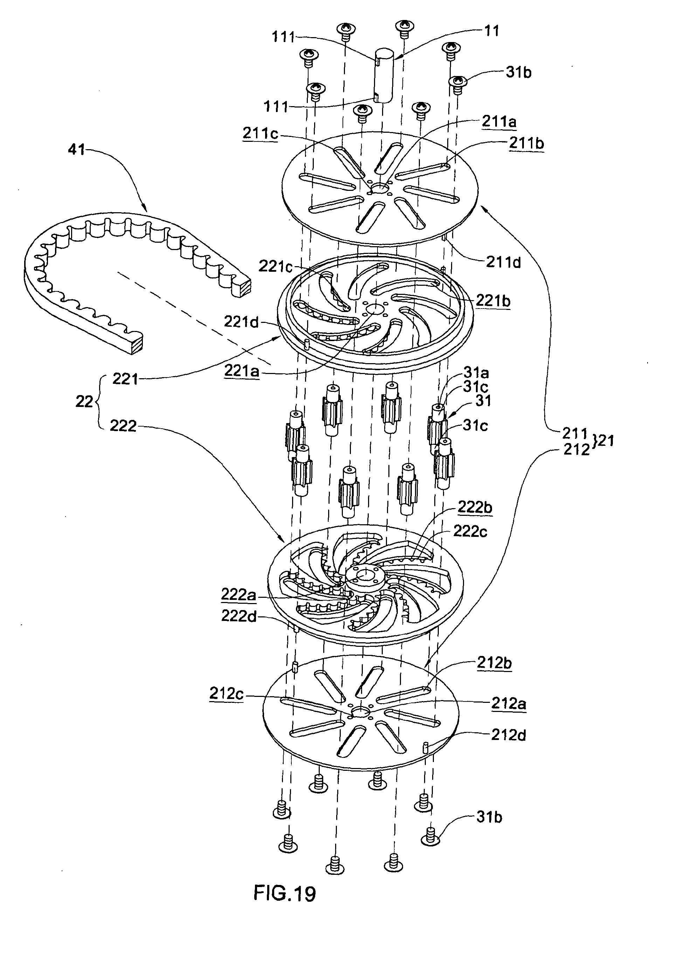

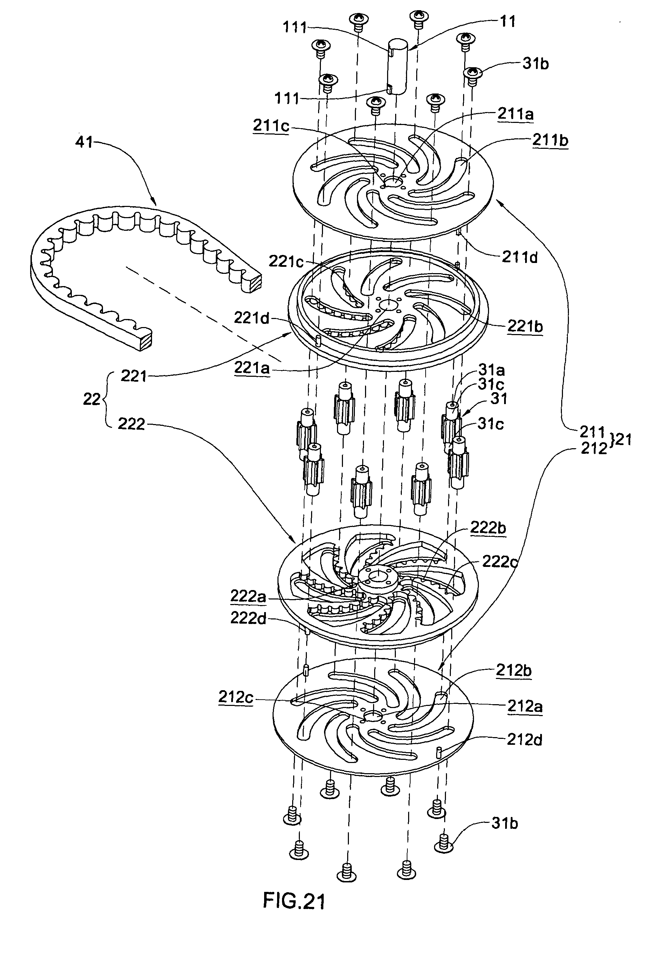

Please refer to Figs. 1 and 3 at the same time. Each of the driving elements 31 may be a gear with axial connecting sections 31c provided at two ends thereof. Each of the axial connecting sections 31c is provided at an end surface with an internally threaded hole 31a for a screwing element 31b to screw thereto. At least one guide rail 211b, 212b is provided on each of the upper joint disk 211 and the lower joint disk 212 for the axial connecting sections 31c to movably locate therein. The guide rails 211b, 212b may either be curved grooves or through openings as shown in Figs. 1 and 21, or straight grooves or through openings as shown in Figs. 15 and 19. In the case the guide rails 211b, 212b are curved or straight grooves adapted to restrict the two axial connecting sections 31c of the driving elements 31 to slide therein, the internally threaded holes 31 a may be omitted from the two end surfaces of the driving elements 31 and the screwing elements 31b are not necessarily provided. Moreover, the upper and the lower joint disk 221, 222 are provide with at least one passage 221b, 222b for the axial connecting sections 31 c of the driving elements 31 to movably engage therewith. The passages 221b, 222b may either be straight slots as shown in Figs. 1 and 15, or curved slots as shown in Figs. 19 and 21, and provided with guiding sections 221c, 222c for the driving elements 31 to mesh therewith. The guiding sections 221c, 222c may be a rack as illustrated in Fig. 1. In assembling the present invention, the at least one driving element 31 is sequentially extended from one axial connecting section 31c through the at least one passage 221b on the upper joint disk 221 and the at least one guide rail 211b on the upper joint disk 211, such that the driving element 31 meshes with the guiding section 221c in the upper joint disk 221. Then, the driving element 31 is locked in place using the screwing element 31b. Thereafter, the driving element 31 is sequentially extended from the other axial connecting section 31 c through the at least one passage 222b on the lower joint disk 222 and the at least one guide rail 212b on the lower joint disk 212, such that the driving element 31 meshes with the at least one guiding section 222c in the lower joint disk 222. Then, the driving element 31 is locked in place using the screwing elements 31b. Finally, as shown in Fig. 3, the transmission element 41 is wound around the driving elements 31. Wherein, the transmission element 41 may be a toothed belt as shown in Figs. 11 and 13, or a chain as shown in Figs. 17 and 18.

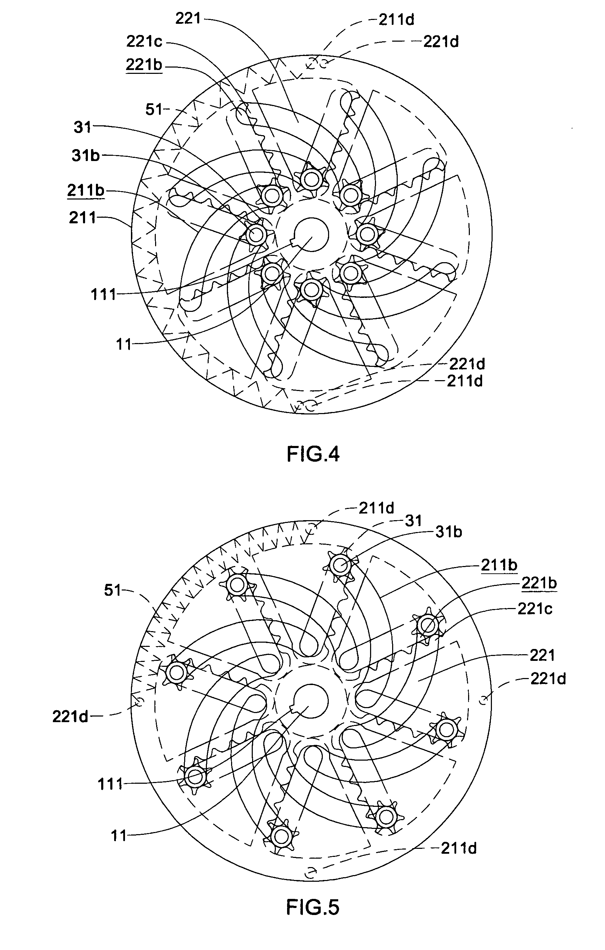

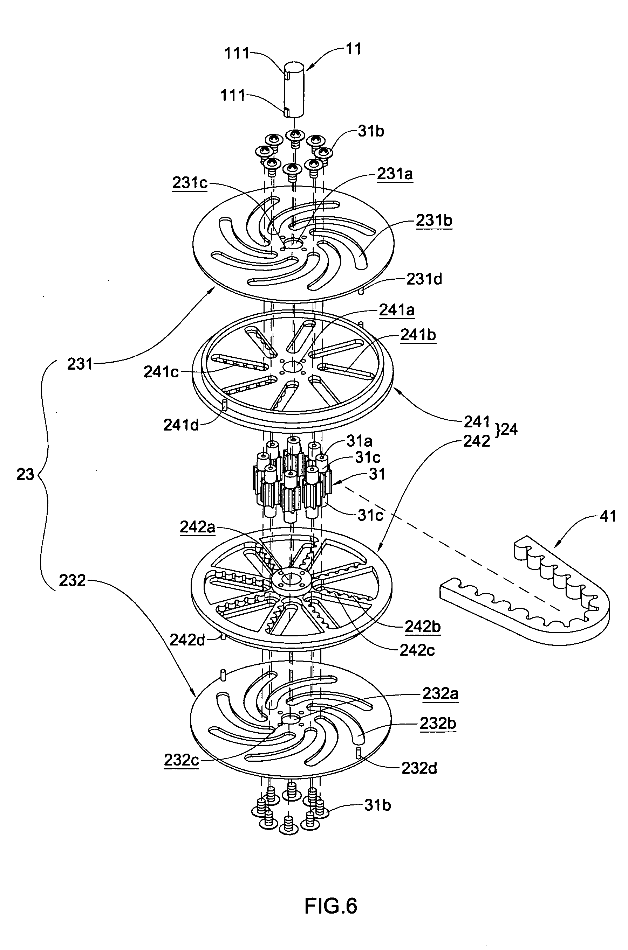

Please refer to Figs. 4 and 5. For the driving element 31 to move from a point close to a center of the upper joint disk 211 (see Fig. 4) to a point close to an outer periphery of the upper joint disk 211 (see Fig. 5), the driving element 31 must be turned clockwise to move outwards along the guide rail 211b. Meanwhile, the upper joint disk 221 is turned counterclockwise. The driving element 31 stops moving when it reaches at the end of the guide rail 211b or the end of the passage 221b. Reversely, when it is desired for the driving element 31 to move from a point close to the outer periphery of the upper joint disk 211 (see Fig. 5) to a point close to the center of the upper joint disk 211 (see Fig. 4), the driving element 31 must be turned counterclockwise to move inwards along the guide rail 211b. Meanwhile, the upper joint disk 221 is turned clockwise. The driving element 31 stops moving when it reaches at the end of the guide rail 211b or the end of the passage 221b. The above movement principle also applies to the lower joint disks 212,222.

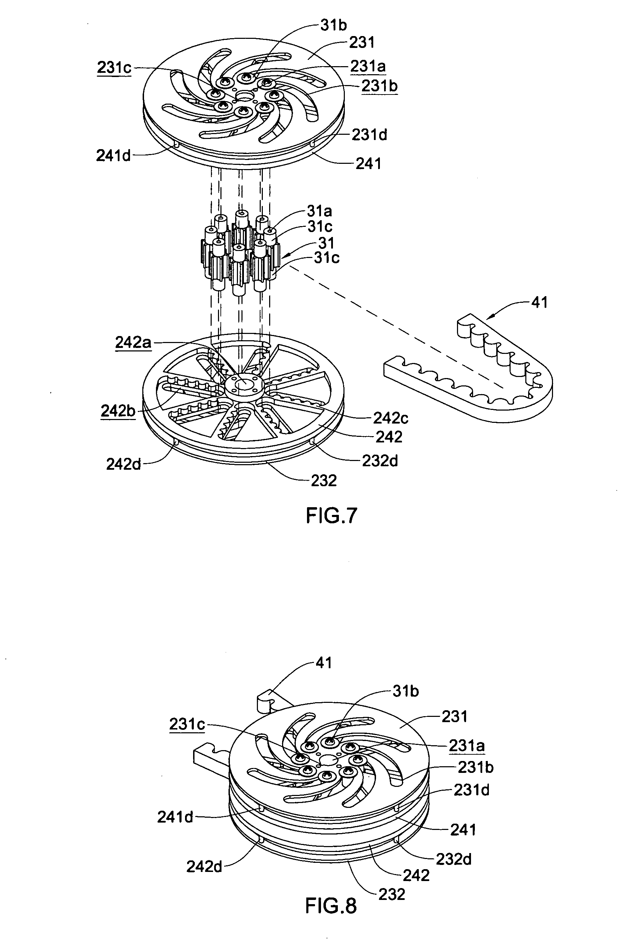

Please refer to Figs. 6, 7, and 8, in which a preferred embodiment of the present invention being employed on a driven mechanism is shown. Since this embodiment has an overall structure generally similar to that of the embodiment of the present invention being employed on a driving mechanism, it is not repeatedly described herein. However, this embodiment includes a first set of joint disks 23 and a second set of joint disks 24 different from those in the first embodiment shown in Figs. 1 to 3.

As can be seen from Fig. 6, the first set of joint disks 23 consist of an upper joint disk 231 and a lower joint disk 232, which can either be manufactured as a single unit or, as illustrated in Fig. 6, two members assembled to form the first set of joint disks 23. The second set of joint disks 24 consist of an upper joint disk 241 and a lower joint disk 242, which can either be manufactured as a single unit or, as illustrated in Fig. 6, two members assembled to form the second set of joint disks 24.

The upper and the lower joint disk 231, 232 are provided with a through hole 231a and a through hole 232a, respectively, for the pivot shaft 11 to extend therethrough. The through holes 231a, 232a are provided at predetermined positions with recesses 231c, 232c, respectively, for the protrusions 111 to engage therewith. The upper and the lower joint disks 241, 242 are also provided with a through hole 241a and 242a, respectively, for the pivot shaft 11 to extend therethrough. The mechanism of the present invention according to this embodiment is assembled in a manner similar to that for assembling the preferred embodiment of the present invention employed on the driving mechanism.

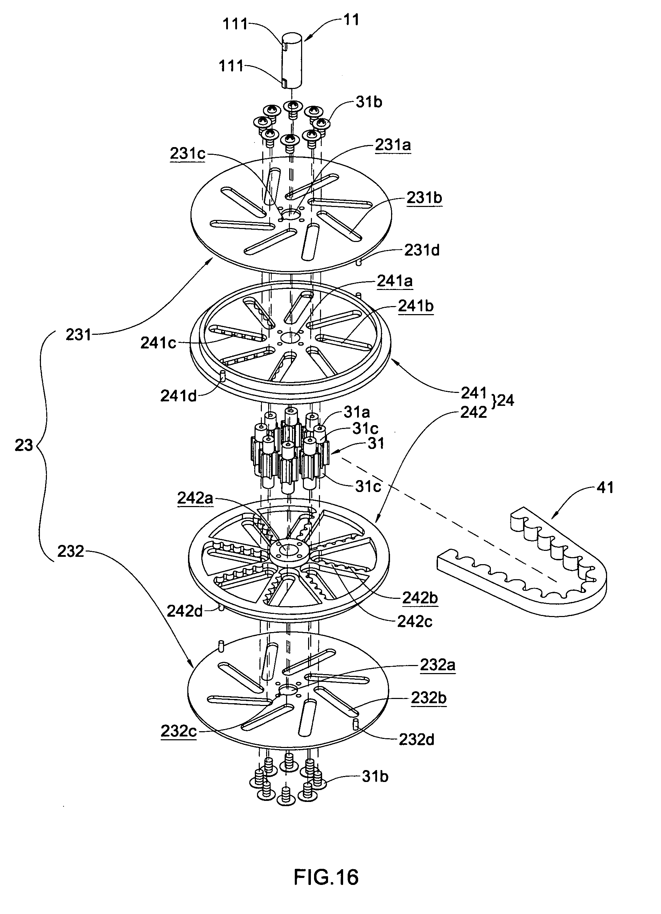

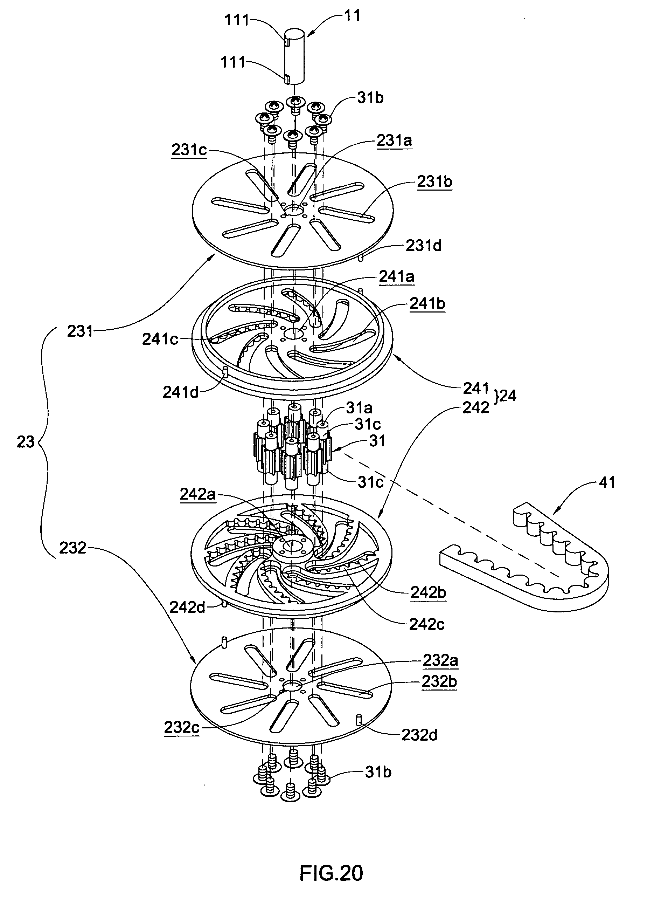

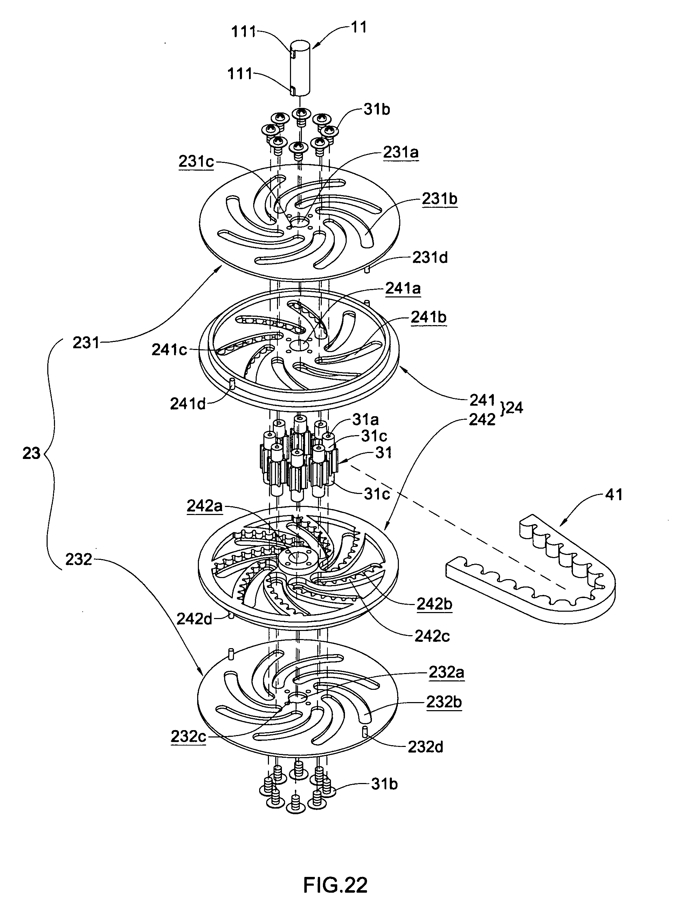

Moreover, the upper joint disk 231 and the lower joint disk 232 are also provided with at least one guide rail 231b and 232b, respectively, for the axial connecting sections 31c of the driving element 31 to movably locate therein. The guide rails 231b, 232b may either be a curved groove or through opening, as shown in Figs. 6 and 22, or a straight groove or through opening as shown in Figs. 16 and 20. In the case the guide rails 231b, 232b are curved or straight grooves adapted to restrict the two axial connecting sections 31c of the driving elements 31 to slide therein, the internally threaded holes 31 a may be omitted from the two end surfaces of the driving elements 31 and the screwing elements 31b are not necessarily provided. The upper and the lower joint disks 241, 242 are also provided with at least one passage 241b and 242b, respectively, for the axial connecting section 31c to movably locate therein. The passages 241b, 242b may either be a straight slot as shown in Figs. 6 and 16, or a curved slot as shown in Figs. 20 and 22, and provided with guiding sections 241c, 242c for the driving elements 31 to mesh therewith. The guiding sections 241c, 242c may be a rack as illustrated in Fig. 6. The mechanism of the present invention according to this embodiment is assembled in a manner similar to that for assembling the preferred embodiment of the present invention employed on the driving mechanism.

Unlike the guide rails 211b, 212b respectively provided on the upper and the lower joint disk 211, 212, which are curved through openings counterclockwise and slightly spirally extended from a central area to a peripheral area of the upper and the lower joint disk 211, 212 as shown in Fig. 1, the guide rails 231b, 232b respectively provided on the upper and the lower joint disk 231, 232 are curved through openings clockwise and slightly spirally extended from the central area to the peripheral area of the upper and the lower joint disk 231, 232 as shown in Fig. 6.

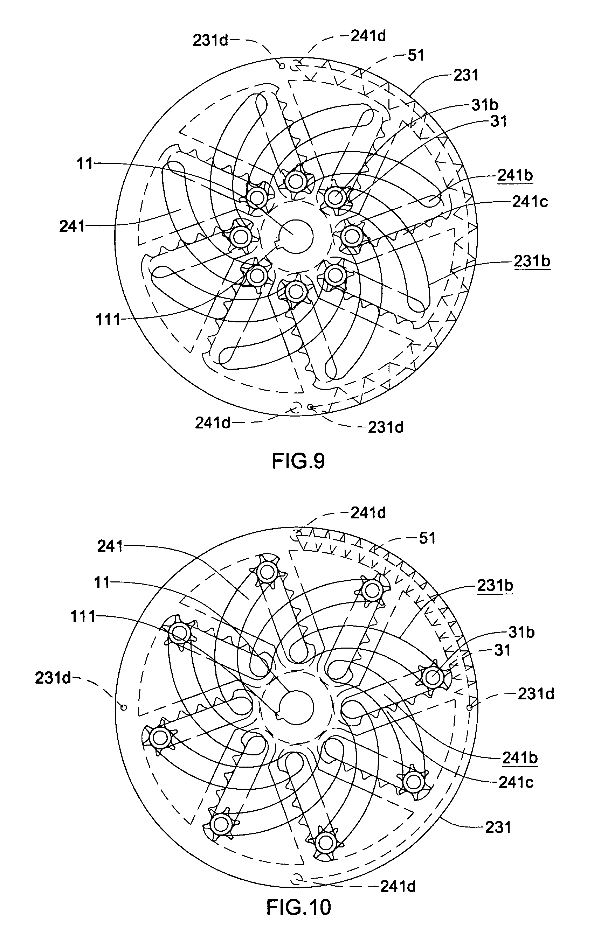

Please refer to Figs. 9 and 10. For the driving element 31 to move from a point close to a center of the upper joint disk 231 (see Fig. 9) to a point close to an outer periphery of the upper joint disk 231 (see Fig. 10), the driving element 31 must be turned clockwise to move outwards along the guide rail 231b. Meanwhile, the upper joint disk 241 rotates clockwise. The driving element 31 stops moving when it reaches at the end of the guide rail 231b or the end of the passage 241b. Reversely, when it is desired for the driving element 31 to move from a point close to the outer periphery of the upper joint disk 231 (see Fig. 10) to a point close to the center of the upper joint disk 231 (see Fig. 9), the driving element 31 must be turned counterclockwise to move inwards along the guide rail 231b. Meanwhile, the upper joint disk 241 rotates counterclockwise. The driving element 31 stops moving when it reaches at the end of the guide rail 231b or the end of passage 241b. The same movement principle also applies to the lower disks 232, 242.

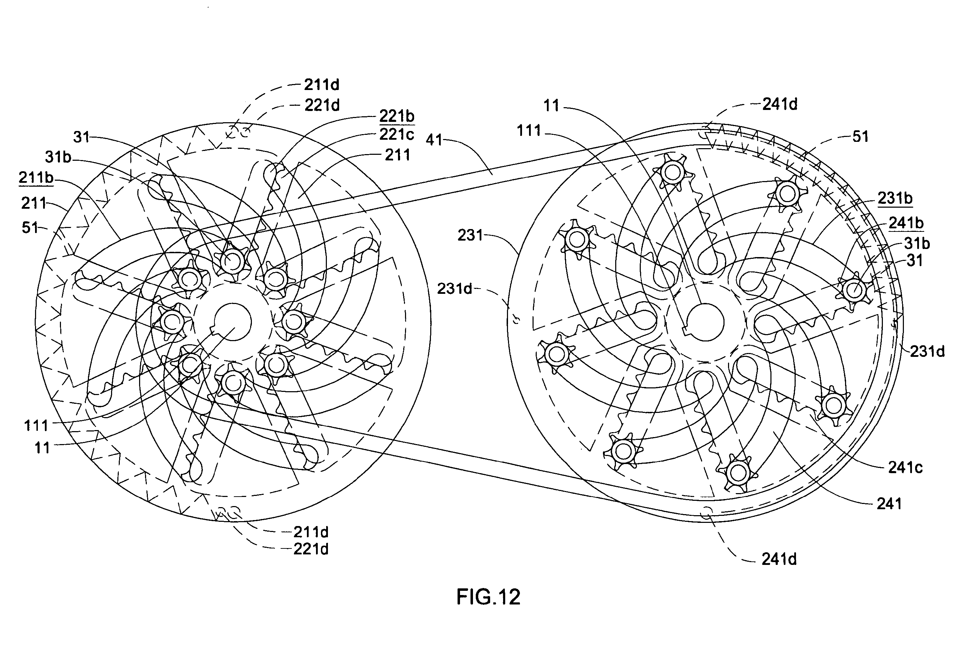

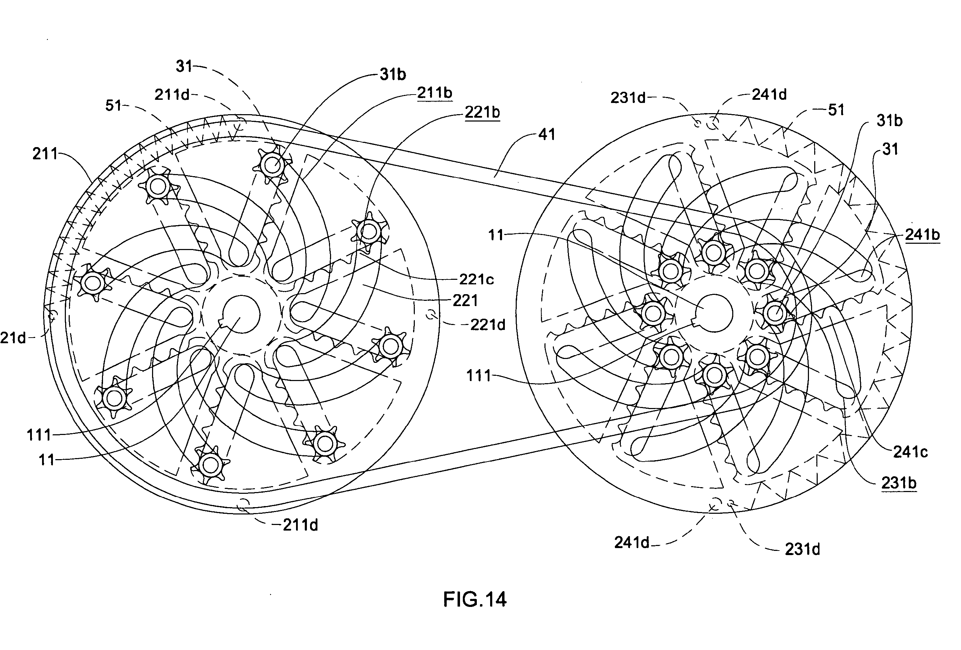

Figs. 11, 12, 13, and 14 schematically shows the winding of the transmission element 41 around two sets of the mechanism of the present invention separately employed on a driving and a driven mechanism (separately located at a left and a right side in Figs. 11, 12, 13 and 14). The acts of automatic stepless speed changing is determined by two interacting forces, one of which is the acting force, that is a clockwise torsion acted on the pivot shaft 11 connected to the first set of joint disks 21 in the present invention, and the other one is the resisting force, that is a counterclockwise torsion acted on the pivot shaft 11 connected to the first set of joint disks 23 in the present invention. When the clockwise torsion acts on the pivot shaft 11 in the first set of joint disks 21, the latter rotate clockwise correspondingly, causing the driving elements 31 on the first set of joint disks 21 to move in two different ways at the same time, that is, to clockwise revolve about the pivot shaft 11 on the first set of joint disks 21 while revolve on their respective axis and radially move outward from the center of the first set of joint disks 21 (as shown in Figs. 11 and 12) to the outer periphery of the first set of joint disks 21 (as shown in Figs. 13 and 14). The above movements cause the transmission element 41 wound around the driving elements 31 to move clockwise, with a winding radius of the transmission element 41 wound around the driving elements 31 of the driving mechanism gradually increases.

However, when a resisting force exists to impede the first set of joint disks 23 from turning clockwise, the transmission element 41 will cause the driving elements 31 on the first set of joint disks 23 to revolve on their respective axis clockwise. Meanwhile, a winding radius of the transmission element 41 wound around the driving elements 31 on driven mechanism gradually increases due to the passages 241b, 242b on the second set of joint disks 24.

The driving elements 31 of the driven mechanism stop revolving on their respective axis under the following three conditions:
(1) The driving elements 31 reach at the end of the guide rails 231b, 232b or the end of the passages 241b, 242b on the first or the second set of joint disks 23 or 24, respectively.
(2) The increase in the rotating radius of the transmission element 41 wound around the driving elements 31 on the driven mechanism has the effect of increasing the clockwise torsion (that is, the aforesaid acting force), and decreasing the counterclockwise torsion (that is, the aforesaid resisting force).
   In the end, the effect generated by the counterclockwise torsion will be counterbalanced by the effect produced by the clockwise torsion.
(3) Since the transmission element 41 has a fixed length, the increase in the winding radius of the transmission element 41 wound around the driving elements 31 on the driving mechanism directly leads to the decrease in the winding radius of the transmission element 41 wound around the driving elements 31 on the driven mechanism and vice versa. In other words, the winding radii of the transmission element 41 wound around the driving elements 31 on the driving and the driven mechanism will stop changing only when the effect generated by the counterclockwise torsion (that is, the resisting force) is counterbalanced by that produced by the clockwise torsion (that is, the acting force).

Therefore, from the above descriptions, it is understood the operating principles of the present invention are as follows:
(1) With the mutual counterbalance between the effect generated by the clockwise torsion (that is, the acting force) and that produced by the counterclockwise torsion (that is, the resisting force), the two winding radiuses of the transmission element 41 wound around the driving and the driven mechanism can be automatically changed.
(2) Since the two winding radii of the transmission element 41 wound around the driving and the driven mechanism determine the ratio of gear, the mutual counterbalance between the effect generated by the clockwise torsion (that is, the acting force) and that produced by the counterclockwise torsion (that is, the resisting force) enables the present invention to automatically change the ratio of gear thereof.

Please refer to Figs. 4 and 5 again. The upper joint disks 211, 221, and the lower joint disks 212, 222 are provided with locating bars 211d, 221d, 212d, 222d, respectively, on each of which an elastic element 51 is mounted. Similarly, as can be seen in Figs. 9 and 10, the upper joint disks 231, 241, and the lower joint disks 232, 242 are provided with locating bars 231d, 241d, 232d, 242d, respectively, on each of which an elastic element 51 is mounted. The elastic element 51 are provided for the transmission element 41 to maintain in a desired tension before the present invention is operated.

With the above arrangements, the present invention provides the following advantageous characteristics:
(1) On average, any transporting vehicle using the present invention moves at a speed much higher than other equivalent manual or automatic shift vehicles to reduce approximate 30% of the running time.
(2) On average, any transporting vehicle using the present invention has an energy efficiency much higher than other equivalent manual or automatic shift vehicles to increase approximate 50% of the running distance.
(3) The cost of the present invention is much lower than that of any other manual-controlled, automatic, or stepless transmission.
(4) The present invention has a weight much lower than any other manual-controlled, automatic, or stepless transmission.

In the present invention, the driving element 31 and the transmission element 41 may be of any other acceptable configuration without being restricted to the gears and the toothed belts shown in the drawings and the illustrated embodiments.

The present invention has been described with some preferred embodiments thereof and it is understood that many changes and modifications in the described embodiments can be carried out without departing from the scope and the spirit of the invention that is intended to be limited only by the appended claims.

## Claims

1. An automatic non-step speed changing mechanism, comprising a pivot shaft, at least one first set of joint disks, and at least one second set of joint disks mounted around said pivot shaft; said first and said second set of joint disks being provided with guide rails and passages, respectively, in each of which a driving element is slidably and rotatably located; each of said passages provided on said second set of joint disks being provided with a guiding section, with which one said driving element is meshed while moving in and relative to said passage; said driving elements being separately movably mounted in said guide rails and said passages to mesh with said guiding sections in said passages; and a transmission element being wound around said driving elements; whereby when said driving elements slide in said guide rails and said passages, a winding radius of said transmission element wound around said driving elements is automatically changed.

2. The automatic non-step speed changing mechanism as claimed in claim 1, wherein said driving elements are gears.

3. The automatic non-step speed changing mechanism as claimed in claim 1 or 2, wherein said transmission element is a toothed belt or a chain.

4. The automatic non-step speed changing mechanism as claimed in one or more of claims 1-3, wherein said guide rails are curved grooves or straight grooves.

5. The automatic non-step speed changing mechanism as claimed in claim 4, wherein said guide rails are curved through openings.

6. The automatic non-step speed changing mechanism as claimed in claim 4, wherein said guide rails are straight through openings.

7. The automatic non-step speed changing mechanism as claimed in in one or more of claims 1-6, wherein said passages are straight slots or curved slots.

8. The automatic non-step speed changing mechanism as claimed in one or more of claims 1-7, wherein said first and said second set of joint disks are provided with locating bars, so that an elastic element is mounted between each of said locating bars on said first set of joint disks and a corresponding one of said locating bars on said second set of joint disks.

9. The automatic non-step speed changing mechanism as claimed in one or more of claims 1-8, wherein said first set of joint disks include at least an upper and a lower joint disk.

10. The automatic non-step speed changing mechanism as claimed in claim 9, wherein said upper and said lower joint disk are manufactured as a single unit.

11. The automatic non-step speed changing mechanism as claimed in claim 9, wherein said upper and said lower joint disk are two separate members assembled together to form said first set of joint disks.

12. The automatic non-step speed changing mechanism as claimed in one or more of claims 1-11, wherein said second set of joint disks includes at least an upper and a lower joint disk.

13. The automatic non-step speed changing mechanism as claimed in claim 12, wherein said upper and said lower joint disk are manufactured as a single unit.

14. The automatic non-step speed changing mechanism as claimed in claim 12, wherein said upper and said lower joint disk are two separate members assembled together to form said second set of joint disks.
